Europäisches Patentamt

European Patent Office

Office européen des brevets

(19)

(11) Numéro de publication : **0 308 303 B1**

(12)

# FASCICULE DE BREVET EUROPEEN

(45) Date de publication du fascicule du brevet :
**22.04.92 Bulletin 92/17**

(51) Int. Cl.⁵ : **A01G 23/08**

(21) Numéro de dépôt : **88402272.4**

(22) Date de dépôt : **09.09.88**

(54) **Procédé et dispositif pour la récolte de taillis cultivés en lignes.**

(30) Priorité : **14.09.87 FR 8712674
04.01.88 FR 8800012**

(43) Date de publication de la demande :
**22.03.89 Bulletin 89/12**

(45) Mention de la délivrance du brevet :
**22.04.92 Bulletin 92/17**

(84) Etats contractants désignés :
**AT BE CH DE ES FR GB GR IT LI LU NL SE**

(56) Documents cités :
**FR-A- 2 293 870
US-A- 4 338 985**

(73) Titulaire : **Le Clerc de Bussy, Jacques
Bussy les Boix
F-80290 Poix de Picardie (FR)**

(72) Inventeur : **Le Clerc de Bussy, Jacques
Bussy les Boix
F-80290 Poix de Picardie (FR)**

(74) Mandataire : **Colas, Jean-Pierre et al
Cabinet de Boisse 37, avenue Franklin D.
Roosevelt
F-75008 Paris (FR)**

EP 0 308 303 B1

## Description

Le document EP-A-0.223.807 décrit notamment la production, la récolte et la torréfaction de bois issus de taillis installés en ligne et exploités par récoltes annuelles.

L'invention se rapporte à la récolte annuelle de taillis cultivés, de préférence en lignes.

La culture intensive de taillis à partir de souches implantées en lignes fournit de fortes tiges ligneuses comportant de petites branches latérales, tiges pouvant atteindre annuellement 300 à 400 cm de hauteur et un diamètre de 3 ou 4 cm à la base.

La récolte s'effectue après la chute des feuilles, elle fournit 30 à 40 tonnes de bois dit "vert" à l'hectare.

Afin de réaliser les buts proposés dans la demande de brevets cités ci-dessus et d'autres buts similaires, il est indispensable de réduire, au moment de la récolte, la totalité de la production ligneuse en tronçons cylindriques d'environ 2 à 4 cm de longueur. En effet on obtient dès lors une matière semi-fluide possédant une forte densité apparente, un talus d'éboulement d'environ 40° et une perméabilité uniforme de la masse ainsi constituée aux gaz qui auront à la traverser à plus ou moins grande vitesse au cours des opérations de transformation et d'utilisation cités dans la demande désignée plus haut.

Il existe des machines récolteuses-hacheuses dites "ensileuses". Ces machines très puissantes sont couramment utilisées pour la récolte de maïs fourrage, cependant elles ne peuvent être retenues pour la récolte de taillis car aucune ne possède un système de cueillage adapté à la récolte de tiges fortement ligneuses. De plus, aucune de ces machines n'est capable de transformer le taillis annuel substantiellement uniquement en tronçons cylindriques. En effet, le produit de la récolte contient, en plus de tronçons de cette forme, des brindilles plus ou moins longues provenant du tranchage des branches latérales implantes sur les tiges ligneuses ainsi qu'une forte proportion de bois broyé provenant de la partie hachoir mal adaptée. La matière obtenue ne possède donc pas les caractéristiques requises.

On connaît aussi, par FR-A-2.414.297, FR-A-2.293.870 et US-A-4.338.985, des machines pour enlever les troncs et branches de végétaux ligneux et les transformer en copeaux ("chips"). En particulier, la machine de FR-A-2.293.870 sectionne la base des tiges à proximité du sol après les avoir fait fléchir vers l'avant dans le sens de la marche. Cependant, aucune de ces machines n'est conçue pour fournir des tronçons cylindriques de longueur sensiblement uniforme.

C'est l'objet de l'invention de fournir un procédé et une machine pour réaliser correctement le cueillage des tiges ligneuses et d'effectuer leur présentation convenable à un hachoir équipant cette machine afin que à peu près la totalité de la matière ligneuse produite soit débitée en tronçons de longueur uniforme de l'ordre de 2 cm à 4 cm.

Pour obtenir ce résultat, l'invention fournit un procédé de récolte par rangs successifs et hachage simultané de tiges ligneuses à peu près verticales, éventuellement pourvues de branches, et provenant de taillis cultivés, comportant les étapes suivantes :
- fléchir les tiges dans une première direction pour amener leur partie supérieure proche de l'horizontale, et maintenir leur partie supérieure à peu près dans cette position;
- sectionner la base des tiges à proximité du sol et laisser la partie inférieure des tiges se déplacer vers le haut par élasticité;
- entraîner les tiges coupées, la base en avant, dans une seconde direction opposée à la première et les rassemblant en un faisceau continu de tiges parallèles;
- faire passer le faisceau à travers un orifice de guidage dont le diamètre est de l'ordre de deux à trois fois le diamètre maximal de tiges à récolter;
- déplacer devant la sortie de cet orifice de guidage au moins une lame tranchante pour couper les tiges en tronçons successifs;
- évacuer les tronçons découpés.

De préférence, on fléchit les tiges coupées et on leur fait suivre un trajet courbe ascendant pour pénétrer dans l'orifice de guidage.

L'invention fournit aussi une machine de récolte par rangs successifs et hachage simultané de tiges ligneuses à peu près verticales et éventuellement pourvues de branches, provenant de taillis cultivés en lignes, comportant :
- un châssis mobile dans une direction d'avancement par rapport au sol et portant un outil apte à sectionner la base des tiges à proximité du sol;
- un tunnel porté par le châssis, en forme de gouttière inversée, en matériau lisse, horizontal ou incliné vers le bas et vers l'arrière par rapport à la direction d'avancement de 10 à 30° environ, ce tunnel étant placé à une hauteur convenable pour fléchir les tiges sans les rompre quand la machine avance dans la première direction, et amener leur partie supérieure à venir en appui contre la face inférieure dudit tunnel;
- des moyens pour couper la base des tiges à proximité du sol;
- une pièce fixe, portée par le châssis et percée d'au moins un orifice de guidage, ayant une entrée et une sortie, et dont le diamètre est tel que les branches sont contraintes à s'aligner dans le prolongement des tiges;
- un hachoir muni d'au moins une lame coupante qui se déplace devant la sortie de l'orifice de guidage;
- des moyens de guidage et d'entraînement comprenant une ou plusieurs paires de cylindres entraîneurs transversaux et de gouttières déflectrices disposées entre les paires de cylindres entraîneurs ou entre une paire de cylindres entraîneurs et un orifice de guidage, afin de rassembler les tiges coupées à leur base et qui se sont approchées de l'horizontale par effet d'élasticité et de les entraîner dans le ou les orifices de guidage;

– des moyens pour évacuer les tronçons formés par le hachoir à partie des tiges.

Le procédé selon l'invention utilise deux fois la propriété d'élasticité que possèdent les tiges ligneuses : une première fois pour le cueillage où les tiges préalablement arquées sont maintenues en cette position, notamment en les forçant à passer sous un tunnel au sommet horizontal et longitudinal duquel les hauts de tiges viennent se serrer les uns contre les autres, avant que soient sectionnés les talons à proximité du sol, ce qui a pour effet, en libérant l'énergie élastique accumulée lors du sectionnement, de provoquer leur relèvement dans l'alignement des hauts de tiges afin de permettre la reprise mécanique dans le plan horizontal, et une seconde fois pour rassembler les tiges coupées en un faisceau parallèle, et plus spécialement quand on leur fait suivre un trajet courbe en les forçant à épouser la courbure d'une surface incurvée, la formation d'un faisceau de tiges destiné à alimenter correctement le hachoir.

Brève description des dessins

L'invention va maintenant être exposée plus en détail avec des exemples pratiques, illustrés par les dessins. Parmi ceux-ci:

– figure 1 est une vue en perspective schématique d'une première réalisation de l'invention;
– figure 2 est une coupe simplifiée partielle d'une partie du hachoir;
– figure 3 est une vue en perspective schématique d'une réalisation préférée de l'invention.

Dans toutes les figures, les mêmes repères désignent des éléments similaires.

Description détaillée des réalisations préférées de l'invention

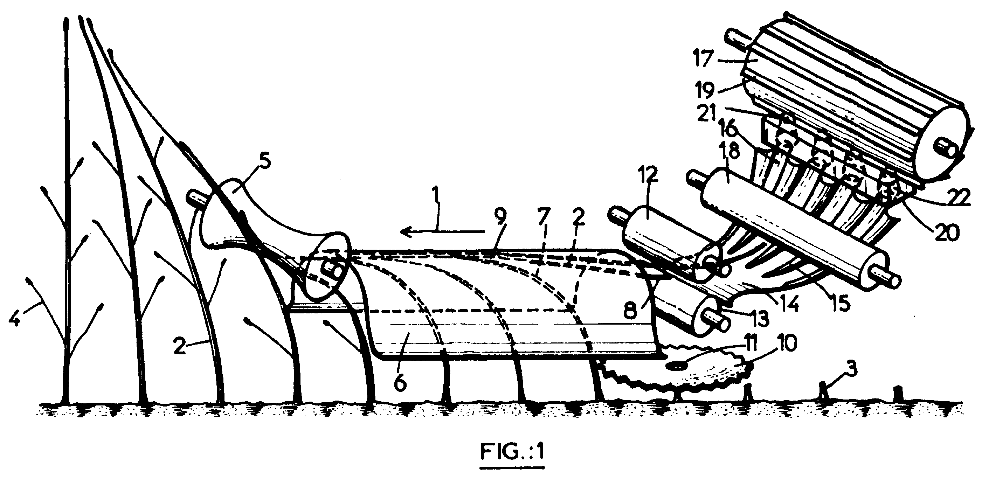

Sur la figure 1, on a seulement représenté, en position, les organes essentiels pour la compréhension de l'invention. En particulier, sur cette figure, on n'a pas représenté le châssis, qui supporte les différents organes de la machine et qui est conçu pour être porté par un tracteur, lui-même non représenté. Seul le sens d'avancement de la machine a été indiqué par la flèche 1. Le dispositif enjambe la ligne de sujets à récolter. Seule une tige 2 par souche 3 a été représentée alors qu'en réalité elles en portent jusqu'à 5 à 10.

Chaque tige porte quelques branches 4 de plus faible section et implantées latéralement.

Un diabolo frontal 5 à axe horizontal et perpendiculaire au sens d'avancement, et à rotation libre, courbe les tiges au fur et à mesure de l'avancement de la machine de récolte.

Le dispositif de la figure 1 comporte, fixé axialement sous la machine porteuse et chevauchant la ligne en cours de récolte, un tunnel 6 réalisé en matériau lisse ayant 100 cm au moins de longueur, 70 cm de hauteur au sol et environ 50 cm de largeur, tunnel ouvert vers le bas, à l'intérieur et au sommet 9 duquel les tiges arquées 7 viennent glisser et se presser tandis que, quand elles sont sectionnées prés du sol, leurs bases 8 se redressent pour se retrouver sensiblement dans le prolongement de leurs tiges alors serrées horizontalement contre la voûte dudit tunnel à la suite duquel sont disposés transversalement deux cylindres entraîneurs 12 et 13 assurant la reprise mécanique desdites tiges.

Le sectionnement à proximité du sol est effectué à l'aide d'une scie circulaire 10 placée selon un plan légèrement incliné afin d'éviter le talonnement contre les souches 3 de son écrou de fixation sur l'axe 11. Les tiges, dont les talons 8 sont redressés sont alors saisies à l'aide d'un jeu de cylindres entraîneurs transversaux 12 et 13 dont la vitesse circonférentielle est légèrement supérieure à celle d'avancement de la machine de récolte, cette disposition ayant pour effet d'éviter les bourrages éventuels.

Le dispositif de la figure 1 comporte une surface 14 en forme de coquille, incurvée vers le haut et s'achevant perpendiculairement au sens d'avancement de la machine, surface pouvant être réalisée en tôle emboutie comportant des nervures 15 à profil se développant latéralement et verticalement déterminant finalement des gouttières 16 séparées et divergentes au fond desquelles les tiges en faisceaux sont appliquées et guidées vers le hachoir. Un cylindre rotatif 18 prévu en partie médiane au-dessus de la surface 14 a pour objet de maintenir les tiges courbées contre la surface incurvée et ainsi à les amener malgré leur élasticité bien au fond des gouttières 16. Les tiges constituant les faisceaux ont des diamètres variant de quelques 3 cm pour les talons à environ 0,5 cm pour les têtes.

Les faisceaux qui ont une section sensiblement constante sont constitués de tiges en cours de tranchage à des stades différents, en effet elles sont intégrées successivement dans les faisceaux au fur et à mesure de l'avancement de la machine.

Le dispositif qui comporte un hachoir 17 à tamtour porte-lames 19 est enfin caractérisé en ce que la contre-lame du hachoir est constituée d'une pièce d'acier 20 percée d'orifices 21 précédés d'entonnoirs de guidage 22 dont l'axe est sensiblement vertical, orifices au travers desquels les faisceaux issus des conduits 16 sont forcés, à frottement doux, de telle façon que les branches 4 soient contraintes à s'aligner dans le prolongement des tiges qui les portent, juste avant l'intervention du tranchage. Le diamètre des orifices 21 de la contre-lame 20 est de l'ordre de deux à trois fois le diamètre maximal des tiges à récolter.

La densité des tiges sur une même ligne à récolter, combinée avec le nombre et le diamètre des orifices de la contre-lame sont tels que les faisceaux qui les traversent juste avant le tranchage n'occupent pas plus de la moitié de la section desdits orifices et que jamais plus de deux talons de tiges ne puissent s'y présenter à la fois.

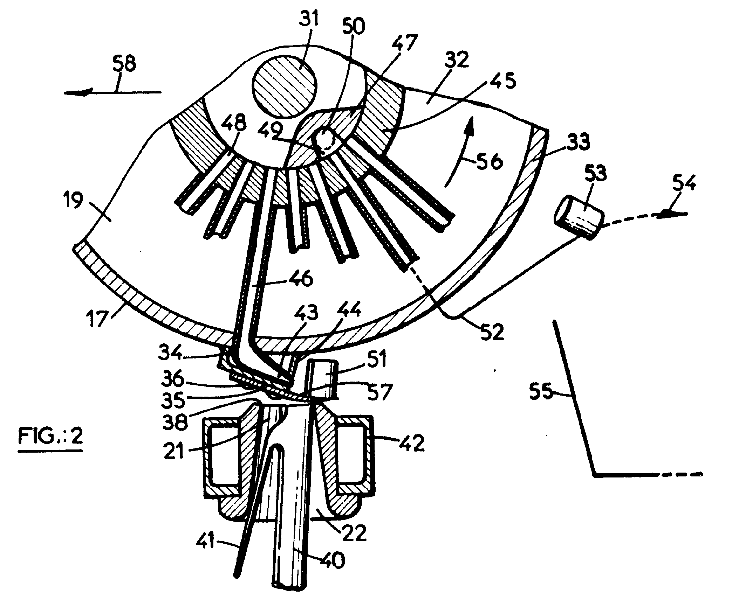

Les vitesses relatives, d'avancement des tiges vers le hachoir et de défilement des lames devant les orifices de la contre-lame, sont réglées de telle façon que les tronçons débités par la machine aient 2 à 4 cm environ de longueur; la reprise des tronçons à la sortie du hachoir peut être effectuée à l'aide d'appareils de manutention bien connus et non représentés sur la figure 1. On peut citer les courroies à chevrons ou les élévateurs à godets. Toutefois, il est préférable d'utiliser des moyens de manutention en liaison avec la disposition de la figure 2, qu'on va maintenant décrire.

La figure 2 est relative à un détail du hachoir.

La technique des hachoirs rotatifs est bien connue, cependant on a constaté qu'une adaptation au problème particulier était avantageuse pour obtenir un tranchage net et à peu près perpendiculaire à l'axe de chaque tige ligneuse. Il faut que les lames coupantes aient un profil effilé, et que leur arête se trouve sur une surface cylindrique très proche de la sortie des orifices de guidage. Il faut aussi que les lames fassent un angle faible avec la tangente à cette surface cylindrique. On constate alors qu'on obtient de bons résultats en ce qui concerne la forme du produit, mais que la force centrifuge qui s'applique aux tronçons qui sont plaqués par elle contre la face interne des lames coupantes gêne leur évacuation ultérieure, et qu'ils peuvent faire un tour complet et venir perturber la coupe des tronçons suivants. Pour éviter cet inconvénient, et séparer les tronçons des lames coupantes à l'endroit convenable, on utilise de préférence la disposition décrite ci-aprés à l'aide de la figure 2.

Le hachoir 17 utilisé est constitué d'un tambour 19 monté sur un axe de rotation horizontal 31 portant deux flasques latérales 32 à la périphérie desquelles est soudé un cylindre porte-lame 33 sur lequel sont fixés par soudure des porte-lames 34 munis de leurs lames 35 fixés par les boulons 36.

Ces porte-lames sont, par exemple au nombre de six par rangée circulaire, et quatre rangées équipent le tambour, elles sont décalées de un vingt-quatrième de tour correspondant aux vingt-quatre lames montées sur le tambour, générant vingt-quatre efforts de tranchage également répartis au cours d'une rotation du hachoir.

Les lames 35 défilent devant la contre-lame qui est constituée, en fait, de quatre orifices 21 placés selon une rangée parallèle à l'axe du tambour et situés sous celui-ci. Leurs lèvres 38 sont avivées afin de permettre la coupe franche des tiges.

Pour la commodité de lecture du dessin, il n'a été représenté qu'un seul porte-lame équipé et un seul orifice contre-lame.

Les orifices 21 sont précédés d'entonnoirs de guidage 22 au travers desquels les tiges 40 doivent nécessairement passer pour être tranchées. Cette disposition permet l'alignement des branches latérales 41 fixées aux tiges, juste avant le tranchage. Les orifices 21 et leurs entonnoirs 22 sont montés solidairement sur une poutre 42 de section rectangulaire, elle-même solidaire du bâti de la machine non représenté sur cette figure.

Des buses aplaties 43 sont incorporées aux porte-lames 34. Elles traversent leur face avant 44 et sont dirigées pour souffler de l'air le long de la face interne 57 de la lame 35, perpendiculairement à son tranchant. Le jet d'air qu'elles produisent, aplati dans le sens du tranchant de la lame, a une largeur à peu près égale au diamètre de l'orifice 21 de la contre-lame, de façon à assurer une évacuation complète des tronçons.

Ces buses sont raccordées à un distributeur 45 rotatif d'air comprimé par une conduite 46. Le distributeur d'air 45 est solidaire de la flasque 32 du tambour, tandis qu'un sabot 47 d'amenée de l'air comprimé est fixé solidairement par rapport au bâti de la machine.

Ainsi la rotation du tambour et donc du distributeur fait défiler les orifices 48 du distributeur 45 devant la fente 49 du sabot 47, ils sont alors successivement alimentés en air comprimé de balayage approvisionné par l'orifice d'entrée 50 du distributeur à l'aide d'une tuyauterie, non représentée, le reliant à un compresseur.

On remarque que, grâce à cette disposition, c'est toujours dans la même position angulaire que s'effectue l'injection d'air par les buses 43 et par conséquent le balayage des lames et que par ce moyen les tronçons 51 sont balayés en 52 et propulsés en 53 selon une trajectoire parabolique 54 pour aller directement tomber dans une benne de réception 55.

Sur la figure, la flèche 56 indique le sens de rotation du tambour, tandis que la flèche 58 montre le sens d'avancement de la machine.

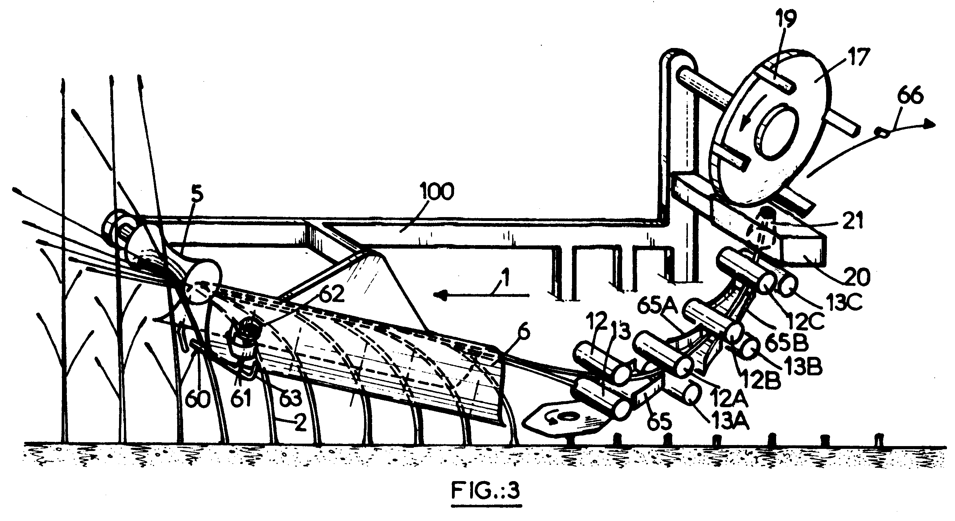

La figure 3 est une vue analogue à celle de la figure 1, montrant un certain nombre de variantes qui font de la machine représentée celle qui est la plus préférée, au moins pour l'utilisation en climats tempérés. Les différentes variantes peuvent être combinées ensemble, comme sur la figure, ou utilisées en combinaison avec des modalités décrites à propos de la figure 1.

Une première variante concerne le tunnel 6. Celui-ci, au lieu d'être horizontal, est incliné vers le bas et vers l'arrière par rapport au sens de la marche indiquée par la flèche 1. La pente du tunnel est d'environ 15°. Des pentes de 10 à 30° peuvent convenir. On obtient ainsi une flexion plus progressive des tiges et un meilleur alignement pour la formation du faisceau.

En outre, le tunnel est pourvu, sur ses bords latéraux, de doigts 60 horizontaux, dont deux seulement sont représentés, montés sur des pivots verticaux 61 situés sur les bords latéraux du tunnel. Chaque doigt est pourvu d'un ressort de rappel 62 qui tend à le faire pivoter vers l'avant, et une butée 63 empêche le doigt de dépasser vers l'avant une position sensiblement perpendiculaire à la direction d'avancement. La disposition du ressort 62 et de la butée 63 sur la figure est symbolique, et des moyens de rappel et d'arrêt différents peuvent être utilisés.

L'intérêt des doigts est le suivant: en marche normale à l'intérieur d'un champ, les tiges 2 non coupées maintiennent contre la face inférieure du tunnel les tiges situées plus en arrière dans la direction d'avancement jusqu'à ce qu'elles soient coupées à la base et reprises par les rouleaux d'entraînement 12, 13. Les doigts 60 sont alors repoussés en arrière par les mêmes tiges et sont inactifs. Lorsqu'on arrive en bordure d'un champ, l'absence de tiges permet aux doigts de prendre la position perpendiculaire à l'avancement. Ils soutiennent alors les dernières tiges de la zone de bordure et permettent leur traitement complet.

Une autre variante concerne les moyens pour sectionner les tiges à la base. La figure 1 montre une scie circulaire 10, pourvue de dents. On a constaté qu'on obtenait des surfaces de coupe plus nettes avec les tiges traitées, qui sont âgées d'un an au plus, en utilisant une scie formée d'une pièce sensiblement en forme d'hexagone, à arêtes tranchantes. On a constaté que les arêtes restent tranchantes très longtemps, grâce au fait que les tiges sont relativement tendres, et que la surface de coupe est plane et régulière.

On peut prévoir que les arêtes sont coupantes sur toute leur longueur, ce qui permet de prolonger l'utilisation de la pièce en la retournant, ou bien que seule la partie de l'arête qui est tournée vers l'avant dans la sens de la rotation est coupante.

On a décrit une pièce en forme d'hexagone, mais une pièce ayant la forme d'un autre polygone convexe, par exemple un pentagone ou un carré, pourrait convenir. Le choix dépend, notamment de la nature des tiges à couper.

D'autres variantes concernent la contre-lame 20 qui contient l'orifice de guidage 21, et les moyens de guidage du faisceau de tiges vers l'orifice 21. A la différence de la figure 1, il y a un seul orifice 21, si bien que le faisceau n'a pas à être divisé. Pour obtenir que les tiges qui se trouvent dans l'orifice n'occupent pas plus de la moitié ou le tiers de la section de l'orifice, il est nécessaire de multiplier par 4, par rapport au cas de la figure 1, la vitesse de déplacement des tiges. Celle-ci est, de préférence au moins quatre fois supérieure à la vitesse d'avancement de la machine. Il est clair que ce rapport dépend, notamment de la densité de la végétation.

Pour obtenir ces vitesses élevées, les moyens de guidage comprennent une série de paires de cylindres d'entraînement 12, 13; 12A, 13A; 12B, 13B; 12C, 13C, entre lesquels sont placées des gouttières déflectrices 65, 65A, 65B de section décroissante, incurvées vers le haut, destinées à resserrer sur elle-même la nappe de tiges entraînée par les cylindres d'entraînement, et à l'incurver vers le haut pour la faire pénétrer dans l'entonnoir 22 précédant l'orifice de guidage 21, à axe dirigé vers le haut.

Le tambour porte-lames 17 est construit sur le même principe que celui de la figure 1, mais il est, bien entendu, d'une longueur axiale beaucoup plus faible, puisqu'il n'y a qu'un orifice 21. Sa vitesse de rotation doit, bien entendu, être adaptée à la vitesse de déplacement des tiges pour obtenir des tronçons de la longueur désirée soit 2 à 4 cm environ. Elle est donc plus élevée que dans le cas de la figure 1. La force centrifuge intense augmente l'utilité des dispositifs de soufflage représenté à la figure 2, et non repris à la figure 3 pour des raisons de clarté. La flèche 66 indique le trajet des tronçons poussés par le jet d'air comprimé vers un récipient destiné à les recevoir.

Dans le cas de la figure 1 comme dans celui de la figure 3, on a prévu que les tiges suivent un trajet incurvé vers le haut pour aboutir à l'orifice de guidage 21, et que celui-ci a une orientation plus proche de la verticale que de l'horizontale, et de préférence il est vertical. Cette disposition permet de disposer le tambour porte-lames 17 au-dessus de la pièce contre-lame 20, donc à bonne distance du sol. De plus les tronçons coupés sont entraînés par les lames d'abord horizontalement puis vers le haut. Cela facilite leur évacuation soit par soufflage d'air, comme décrit à la figure 2, soit par un autre moyen, mécanique par exemple.

On a représenté en 100, de façon schématique, une partie de châssis de la machine. Ce châssis porte les axes de diabolo 5, des cylindres 12, 13, 12A, 13A, etc... et du tambour porte-lames 17, ainsi que le tunnel 6 et les gouttières déflectrices 65, 65A, 65B. Le châssis 100 peut être muni de moyens d'accrochage à un tracteur et/ou de roues.

Un châssis similaire, non représenté est utilisé dans la machine de la figure 1.

## Revendications

1. Procédé de récolte par rangs successifs et hachage simultané de tiges ligneuses à peu près verticales, éventuellement pourvues de branches, et provenant de taillis cultivés, procédé selon lequel on sectionne la base des tiges à proximité du sol, puis on coupe les tiges sectionnées en tronçons de longueur sensiblement égale choisie à l'avance, et caractérisé en ce qu'il comporte les étapes suivantes :

– fléchir les tiges dans une première direction pour amener leur partie supérieure proche de l'horizontale, et maintenir leur partie supérieure à peu près dans cette position ;

– sectionner la base des tiges à proximité du sol et laisser la partie inférieure des tiges se déplacer vers le haut par élasticité ;

– entraîner les tiges coupées, la base en avant dans une seconde direction opposée à la première et les rassemblant en un faisceau continu de tiges parallèles ;

– faire passer le faisceau à travers un orifice de guidage dont le diamètre est de l'ordre de deux à trois fois le diamètre maximal des tiges à récolter ;

– déplacer devant la sortie de cet orifice de guidage au moins une lame tranchante pour couper les tiges en tronçons successifs ;

– évacuer les tronçons découpés.

2. Procédé selon la revendication 1, dans lequel on fléchit les tiges coupées et on leur fait suivre un trajet courbe ascendant pour pénétrer dans l'orifice de guidage.

3. Machine de récolte par rangs successifs et hachage simultané de tiges ligneuses (2) à peu près verticales et éventuellement pourvues de branches (4), provenant de taillis cultivés, comportant :

– un châssis (100) mobile dans une direction d'avancement par rapport au sol et portant un outil apte à sectionner la base des tiges à proximité du sol ;

– un hachoir muni d'au moins une lame coupante mobile;

– des moyens de guidage et d'entraînement capables de rassembler les tiges coupées et de les entraîner vers le hachoir;

– des moyens pour évacuer les tronçons formés par le hachoir à partir des tiges;

machine caractérisée en ce qu'elle comprend en outre :

– un tunnel (6) porté par le châssis, en forme de gouttière inversée, en matériau lisse, horizontal ou incliné vers le bas et vers l'arrière par rapport à la direction d'avancement de 10 à 30° environ, ce tunnel étant placé à une hauteur convenable pour fléchir les tiges sans les rompre quand la machine avance dans la première direction, et amener leur partie supérieure à venir en appui contre la face inférieure dudit tunnel;

– une pièce fixe (20), portée par le châssis et percée d'au moins un orifice de guidage (21), ayant une entrée et une sortie, et dont le diamètre est tel que les branches sont contraintes à s'aligner dans le prolongement des tiges, la lame coupante (35) du hachoir étant prévue pour se déplacer devant la sortie de l'orifice de guidage, et en ce que les moyens de guidage et d'entraînement comprennent une ou plusieurs paires de cylindres entraîneurs transversaux (12, 13; 12A, 13A; 12B, B) et de gouttières déflectrices (65, 65A, 65B) disposées entre les paires de cylindres entraîneurs ou entre une paire de cylindres entraîneurs et un orifice de guidage (21), afin de rassembler les tiges coupées à leur base et qui se sont approchées de l'horizontale par effet d'élasticité et de les entraîner dans le ou les orifices de guidage.

4. Machine selon la revendication 3, dans laquelle le tunnel (6) est horizontal.

5. Machine selon la revendication 3, dans laquelle le tunnel (6) est incliné vers le bas de 10 à 30° environ vers le bas et vers l'arrière par rapport à la direction d'avancement.

6. Machine selon l'une des revendications 3 à 5, dans laquelle le tunnel est pourvu à sa partie inférieure, de doigts horizontaux (60) capables de pivoter autour d'axes verticaux (61) entre une première position où ils sont perpendiculaires à ladite direction d'avancement, et une seconde position, ou sont orientés en sens opposé à ladite directement d'avancement, ces doigts étant pourvus de moyens de rappel (62) qui tendent à les forcer vers la première position, et dont la force est surmontée par la résistance des tiges quand la machine se déplace dans la première dimension.

7. Machine selon l'une des revendications 3 à 6, dans laquelle les moyens pour couper la base des tiges comprennent un disque (10) à peu près horizontal en forme de polygone convexe, capable de tourner autour de son axe vertical et dont au moins les parties des arêtes tournées vers l'avant dans le sens de cette rotation sont coupantes.

8. Machine selon l'une des revendications 3 à 7, dans laquelle le hachoir est constitué d'une pièce (17) montée pour tourner autour d'un axe horizontal perpendiculaire à ladite direction d'avancement et portant au moins une lame coupante (35), dont l'arête est parallèle à l'axe.

9. Machine selon l'une des revendications 3 à 8, dans laquelle la ou les paires de rouleaux entraîneurs (12, 13 ; 12A, 13A ; 12B, 13B ; 12C, 13C) sont pourvues de moyens pour les faire tourner à une vitesse périphérique plusieurs fois supérieure à la vitesse d'avancement de la machine sur le sol.

10. Machine selon l'une des revendications 3 à 9, dans laquelle lesdits moyens d'entraînement (12, 13 ; 12A, 13A ; 12B, 13B ; 12C, 13C ; 65, 65A, 65B) sont disposés pour définir un trajet incurvé vers le haut, et l'orifice de guidage (20) a une direction plus proche de la verticale que de l'horizontale.

11. Machine selon l'une des revendications 3 à 10, dans laquelle l'orifice de guidage (21) comporte une partie d'entrée (22), tournée vers lesdits moyens d'entraînement, de forme convergente vers la sortie.

12. Machine selon l'une des revendications 8 à 11, dans laquelle les moyens d'évacuation comprennent au moins une buse de soufflage (43) capable d'envoyer un jet d'air sur un tronçon (51) découpé par une lame coupante et maintenu sur la face interne de celle-ci par la force centrifuge.

13. Machine selon la revendication 12, dans laquelle la buse de soufflage (43) est reliée à une source de gaz comprimé par l'intermédiaire d'un distributeur rotatif (45) tournant à la même vitesse que le hachoir, ce distributeur alimentant la buse de telle façon que le tronçon projeté par soufflage est envoyé vers un moyen de réception.

**Claims**

1. Process for the harvesting in successive rows and the simultaneous chopping of approximately vertical standards, possibly provided with branches, and coming from cultivated coppices, according to which the base of the standards is severed in proximity to the ground and the severed standards are then cut into portions of substantially equal preselected length and this being characterised in that it involves the following steps:
   – bending the standards in a first direction in order to bring their upper part near to the horizontal, and maintaining their upper part approximately in this position;
   – severing the base of the standards in proximity to the ground and allowing the lower part of the standards to shift upwards as a result of the elasticity;
   – driving the cut standards, base forward, in a second direction opposite to the first and gathering them into a continuous bundle of parallel standards;
   – causing the bundle to pass through a guide orifice, the diameter of which is of the order of two to three times the maximum diameter of the standards to be harvested;
   – displacing in front of the exit of this guide orifice at least one cutting blade in order to cut the standards into successive portions;
   – disposing of the cut portions.

2. Process according to Claim 1, wherein the cut standards are bent and made to follow an ascending curved path in order to penetrate into the guide orifice.

3. Machine for the harvesting in successive rows and the simultaneous chopping of approximately vertical standards (2), possibly provided with branches (4), and coming from cultivated coppices, comprising:
   – a frame (100) movable in a direction of advance in relation to the ground and carrying an implement capable of severing the base of the standards in proximity to the ground;

– a chopper equipped with at least one movable cutting blade;
   – guiding and driving means capable of gathering the cut standards and of driving them towards the chopper;
   – means for disposing of the portions formed by the chopper from the standards;
   the machine being characterised in that it comprises furthermore:
   – a tunnel (6) carried by the frame, in the form of an upturned gutter, made of smooth material and horizontal or inclined downwards and rearwards at approximately 10 to 30° in relation to the direction of advance, this tunnel being located at a height suitable for bending the standards, without breaking them, when the machine advances in the first direction and for causing their upper part to come to bear against the lower face of said tunnel;
   – a stationary piece (20) carried by the frame and pierced with at least one guide orifice (21) which has an entrance and an exit and the diameter of which is such that the branches are forced to come into alignment in the extension of the standards, the cutting blade (35) of the chopper being intended to be displaced in front of the exit of the guide orifice,
   and in that the guiding and driving means comprise one or more pairs of transverse driving cylinders (12, 13; 12A, 13A; 12B, 13B) and of deflector troughs (65, 651, 65B) arranged between the pairs of driving cylinders or between a pair of driving cylinders and a guide orifice (21), in order to gather the standards, which are cut at their base and which have come near to the horizontal as a result of the elasticity effect, and to drive them into the guide orifice or guide orifices.

4. Machine according to Claim 3, wherein the tunnel (6) is horizontal.

5. Machine according to Claim 3, wherein the tunnel (6) is inclined at approximately 10 to 30° downwards and rearwards in relation to the direction of advance.

6. Machine according to one of Claims 3 to 5, wherein the tunnel is equipped, in its lower part, with horizontal fingers (60) capable of pivoting about vertical axes (61) between a first position, in which they are perpendicular to the said direction of advance, and a second position, in which they are oriented in the opposite direction to said direction of advance, these fingers being equipped with return means (62) which tend to force them towards the first position and the force of which is overcome by the resistance of the standards when the machine is displaced in the first direction.

7. Machine according to one of Claims 3 to 6, wherein the means for cutting the base of the standards comprise an approximately horizontal disc (10) in the form of a convex polygon, which is capable of rotating about its vertical axis and of which at least the parts of the edges facing forwards in the direction of this rotation are cutting.

8. Machine according to one of Claims 3 to 7, wherein the chopper consists of a component (17) mounted so as to rotate about a horizontal axis perpendicular to said direction of advance and carrying at least one cutting blade (35), the edge of which is parallel to the axis.

9. Machine according to one of Claims 3 to 8, wherein the pair or pairs of driving cylinders (12, 13; 12A, 13A; 12B, 13B; 12C, 13C) are equipped with means for causing them to rotate at a peripheral speed a plurality of times higher than the speed of advance of the machine on the ground.

10. Machine according to one of Claims 3 to 9, wherein said driving means (12, 13; 12A, 13A; 12B, 13B; 12C, 13C; 65, 65A, 65B) are arranged so as to define a path curved upwards, and the guide orifice (20) has a direction nearer the vertical than the horizontal.

11. Machine according to one of Claims 3 to 10, wherein the guide orifice (21) comprises an entry part (22) facing said driving means and of a form convergent towards the exit.

12. Machine according to one of Claims 8 to 11, wherein the disposal means comprise at least one blowing nozzle (43) capable of transmitting an air jet to a portion (51) cut by a cutting blade and maintained on the inner face of the latter by centrifugal force.

13. Machine according to Claim 12, wherein the blowing nozzle (43) is connected to a compressed-gas source by means of a rotary distributor (45) rotating at the same speed as the chopper, this distributor feeding the nozzle in such a way that the portion thrown off by blowing is conveyed towards a reception means.

## Patentansprüche

1. Verfahren zum Ernten von aufeinanderfolgenden Reihen und zum gleichzeitigen Zerhacken von im wesentlichen vertikal ausgerichteten Holzstämmen, an denen sich gegebenenfalls Zweige befinden, und die aus Buschholzkulturen stammen, wobei man nach dem Verfahren den unteren Teil der Stämme in der Nähe des Bodens durchschneidet, sodann die durchgetrennten Stämme in Stücke mit einer im vorhinein genauestens ausgewählten Länge schneidet, dadurch gekennzeichnet, daß das Verfahren die folgenden Arbeitsstufen aufweist:
– Biegen der Stämme in einer ersten Richtung, um deren oberen Teil nahezu in die Horizontale zu bringen und um deren oberen Teil im wesentlichen in dieser Lage festzuhalten;
– Schneiden des unteren Teils der Stämme in der Nähe des Bodens und zulassen, daß der untere Teil der Stämme sich zufolge der Elastizität nach oben bewegt;
– Fördern der geschnittenen Stämme mit dem unteren Teil nach vorn in einer zweiten Richtung, die der ersten Richtung entgegengerichtet ist, und Zusammenbringen der Stämme in ein durchgehendes Bündel aus parallelen Stämmen;
– Passsierenlassen des Bündels durch eine Führungsöffnung, deren Durchmesser in der Größenordnung des Zwei- bis Dreifachen des maximalen Durchmessers der zu erntenden Stämme liegt;
– Anordnen von wenigstens einer Schneidklinge vor dem Ausgang der Führungsöffnung, um die Stämme in aufeinanderfolgende Stücke zu schneiden;
– Ausgeben der geschnittenen Stücke.

2. Verfahren nach Anspruch 1, dadurch gekennzeichnet, daß man die geschnittenen Stämme biegt und sie einer kurvenförmigen Bahn folgen läßt, die aufsteigt, um durch die Führungsöffnung hindurchzugehen.

3. Erntevorrichtung für aufeinanderfolgende Reihen und zum gleichzeitigen Zerhacken von im wesentlichen vertikal ausgerichteten und gegebenenfalls mit Zweigen (4) versehenen Holzstämmen (2), die aus Buschholzkulturen stammen, aufweisend:
– einen Rahmen (100), der in einer Vorbewegungsrichtung zum Boden bewegbar ist und ein Werkzeug trägt, welches in der Lage ist, um den unteren Teil der Stämme in der Nähe des Bodens zu schneiden;
– ein Zerhacker oder Häcksler, der mit wenigstens einer beweglichen Schneidklinge versehen ist;
– Führungs- und Fördereinrichtungen, die in der Lage sind, die geschnittenen Stämme zusammenzuführen und sie zum Häcksler zu führen;
– Mittel zum Ausgeben der durch den Häcksler aus den Stämmen gebildeten Stücke ;
wobei die Vorrichtung dadurch gekennzeichnet ist, daß sie weiterhin aufweist :
– einen Tunnel (6), der vom Rahmen getragen ist, die Form einer umgekehrten Traufe oder Rinne hat, aus glattem Material gebildet ist und horizontal oder nach unten und nach hinten zur Vorbewegungsrichtung um ungefähr 10° bis 30° geneigt ist, wobei dieser Tunnel auf einer Höhe angeordnet ist, die zweckmäßig ist, um die Stämme ohne sie zu zerbrechen zu biegen, wenn sich die Vorrichtung in der ersten Richtung vorbewegt und um deren oberen Teil so aufzunehmen, daß er an der inneren Fläche des Tunnels zur Anlage kommt;
– einen festen Teil (20), der durch den Rahmen getragen ist und von wenigstens einer Führungsöffnung (21) durchbrochen ist, die einen Eingang und einen Ausgang aufweist und deren Durchmesser so gewählt ist, daß die Zweige zusammengedrückt werden, um in Verlängerung der Stämme ausgerichtet zu werden, wobei die Schneidklinge (35) des Häckslers so ausgebildet ist, daß sie sich vor dem Ausgang der Führungsöffnung bewegt und dadurch gekennzeichnet ist, daß die Führungs- und Fördereinrichtungen ein oder mehrere Paare aus horizontal ausgerichteten Zylinderförderern (12, 13; 12A, 13A; 12B, 13B; 12C, 13C) und Lenkführungsrinnen (65; 65A, 65B) aufweisen, die entweder zwischen den Transportzylinderpaaren oder zwischen einem Transportzylinderpaar und der Führungsöffnung (21) angeordnet sind, um die an ihrem unteren Ende durchtrennen und im wesentlichen durch ihre Elastizität in die Horizontale gebrachten Stämme zusammenzuführen und sie in die eine oder die Führungsöffnungen zu führen.

4. Erntevorrichtung nach Anspruch 3, dadurch gekennzeichnet, daß der Tunnel (6) horizontal ausgerichtet ist.

5. Erntevorrichtung nach Anspruch 3, dadurch gekennzeichnet, daß der Tunnel (6) nach unten um ungefähr 10°bis 30° nach unten und nach hinten zur Vorbewegungsrichtung geneigt ist.

6. Erntevorrichtung nach einem der Ansprüche 3 bis 5, bei welcher der Tunnel an seinem unteren Teil mit horizontal ausgerichteten Fingern (60) ausgebildet ist, die um vertikale Achsen (61) zwischen einer ersten Stellung in der sie zur vorgenannten Vorbewegungsrichtung senkrecht ausgerichtet sind, und einer zweiten Stellung verschwenkbar sind, in der sie in entgegengesetzter Richtung zur vorgenannten Vorbewegungsrichtung orientiert sind, wobei die Finger mit Halterungsteilen (62) ausgebildet sind, die dahin tendieren, daß jene in die erste Stellung gedrückt werden, wobei deren Kraft durch den Widerstand der Stämme überwunden wird, wenn die Maschine sich in der ersten Richtung bewegt.

7. Erntevorrichtung nach einem der Ansprüche 3 bis 6, wobei die Mittel zum Schneiden des unteren Teils der Stämme eine Scheibe (10) aufweisen, die nahezu horizontal in der Form eines konvexen Vielecks ausgebildet ist und um ihre vertikale Achse drehbar ist, wobei wenigstens die nach vorn gerichteten Teile der Schneiden, in Drehrichtung schneidend sind.

8. Erntevorrichtung nach einem der Ansprüche 3 bis 7, gemäß welcher der Zerhacker oder Häcksler aus einem Stück (17) gebildet ist, welches gehaltert ist, um sich um eine horizontale Achse zu drehen, die senkrecht zur vorgenannten Vorbewegungsrichtung ausgerichtet ist und wenigstens eine Schneidklinge (35) aufweist, wobei deren Schneide parallel zur Achse ausgerichtet ist.

9. Erntevorrichtung nach einem der Ansprüche 3 bis 8, gemäß welcher das eine Paar oder die Führungsrollenpaare (12, 13; 12A, 13A; 12B, 13; 12C, 13C) mit Mitteln ausgestattet ist bzw. sind, um sich mit einer Umfangsgeschwindigkeit zu drehen, die mehrfach größer als die Vorbewegungsgeschwindigkeit der Vorrichtung auf dem Boden ist.

10. Erntevorrichtung nach einem der Ansprüche 3 bis 9, gemäß welcher die Führungseinrichtungen (12, 13; 12A, 13A; 12B, 13B; 12C, 13C; 65, 65A, 65B) so angeordnet sind, um eine Bahn festzulegen, die kurvenförmig nach oben verläuft und die Führungsöffnung (20) eine Richtung hat, die der Vertikalen näher als der Horizontalen ist.

11. Erntevorrichtung nach einem der Ansprüche 3 bis 10, gemäß welcher die Führungsöffnung (21) einen Eintrittsteil (22) aufweist, der zu den genannten Fördereinrichtungen ausgerichtet ist und zum Ausgang hin konvergiert.

12. Erntevorrichtung nach einem der Ansprüche 8 bis 11, gemäß welcher die Ausgabeeinrichtung wenigstens eine Blasdüse (43) aufweist, welche in der Lage ist, einen Luftstoß auf einen durch die Schneide abgetrennten Bruchteil (51) auszuüben, welche auf der inneren Fläche dieser Schneide zufolge der Zentrifugalkraft gehaltert ist.

13. Erntevorrichtung nach Anspruch 12, gemäß welcher die Blasdüse (13) aus einer Gasquelle gespeist ist, welche mit Hilfe eines Drehverteilers (45) komprimiert wird, welcher sich mit der gleichen Geschwindigkeit wie die des Häcksler dreht wird, wobei der Verteiler die Düse so speist, daß der durch den Blasvorgang wegbewegte Bruchteil in Richtung auf eine Aufnahmevorrichtung gefördert wird.

FIG.:1

FIG.:2

FIG.:3